# EUROPEAN PATENT APPLICATION

(11) **EP 2 189 873 A2**
(43) Date of publication of application: **26.05.2010**
(21) Application number: 09252653.2
(22) Date of filing: 19.11.2009
(51) Int. Cl.: G06F 1/16

(54) **Case and stand for a portable computer**

(30) Priority: 20.11.2008 GB 0821156; 21.11.2008 GB 0821243
(71) Applicant: Andrews, John, 14 Y Fron Aberffraw Anglesey, North Wales LL63 5EQ (GB)
(72) Inventor: Andrews, John, 14 Y Fron Aberffraw Anglesey, North Wales LL63 5EQ (GB)
(74) Representative: Hamilton, Alistair

(57) **Abstract**

A device that can be used as a case or a stand for a portable computer is disclosed. The device comprising a generally rectangular sheet having first to fifth interconnected panels (16, 18, 20, 22, 24) disposed along a long axis (A-A), the panels being interconnected by elements that allow them to fold with respect to one another about respective fold axes. The fifth panel has a support surface upon which a computer can be supported, the third and the forth panels are, together, in the direction of the long axis of approximately the same length as the fifth panel, and the first panel is of approximately the same dimension as the fifth panel. The first panel and the fifth panel carry fasteners (34, 36) such that a free edge region of the fifth panel can be connected to a face of the first panel. In a first configuration, the fifth panel is folded to overlie the third and the forth panels to the underside of a computer, the first panel is approximately parallel to the fifth panel, to the top of a computer, and the second panel extends approximately normally thereto to the front of a computer. In a second configuration, the edge region of the fifth panel is connected to the face of the first panel whereby the fifth panel, and a computer carried thereon, is supported on a slope by the fourth panel.

## Description

This invention relates to a case and stand for a portable computer.

Portable computers (often known as "laptops" or "notebook computers") are widely used by people who wish to be able to work or use their computers for leisure in a variety of places. This offers their users great convenience. Such computers are not without their disadvantages. A portable computer is a complex and expensive piece of equipment that can be damaged quite easily. Therefore, users of such computers must run the risk of damaging their machines, or transport them in a protective case. Some users find such a case inconvenient, because it adds to the bulk and weight of the computer, and the user must find somewhere to temporarily store the case when the computer is in use.

Moreover, the compact nature of such computers imposes limitations upon the shape, size and configuration of their components, which can be detrimental to their ergonomics. This can be compounded by *ad-hoc* arrangements that typically are imposed by working in places that are not fully equipped as an office. For example, when a portable computer is placed on a desktop, its keyboard will often be too flat and its display too low to allow an operator to sit in an optimal position. While there have been various proposals for stands upon which a portable computer can be rested while in use, they have some disadvantages. If a stand is bulky or heavy to carry, it defeats the portability of the computer, so it is unlikely to be used, other than in one location.

The inventor has realised that problems with known devices can be overcome, or at least ameliorated, with a minimum of inconvenience to the user by providing a device that can serve both as a protective case and a support for a computer. An aim of the invention is to provide such a device.

US-A-5 887 723 provides a foldable jacket for a portable computer comprising interconnected folded panels that can be used to support a computer in a raised position. However, as can be seen in these figures, when the stand is used in a raised configuration, a laptop projects well beyond the top of the support panel. When the screen of the laptop is opened, this causes significant instability, there being a tendency for the laptop to topple rearwards from the stand.

This invention provides a device for use with a portable computer that, in a first configuration, can serve as a protective storage container for a portable computer and, in a second configuration, serves as a support upon which a portable computer can be placed for use. More specifically, it provides a device for use with a portable computer as set forth in claim 1.

This provides an particular advantage that is not obtained from a stand or a protective case alone: the device is always useful to the user, and does not become an inconvenience, irrespective of whether the computer is being transported or is in use. Thus, it lacks the disincentives to use that are present in known stands and carrying cases. It also presents the computer to a user in an ergonomic disposition, raised from a supporting surface, that allows it to be used safely and comfortably.

Most advantageously, the device may be placed in several alternative configurations in which it can serve as a support, in which the computer adopts several alternative arrangements. For example, in one such configuration, the computer may lie substantially flat with relation to a supporting surface. This arrangement allows a computer to be used on many flat or uneven surfaces, including a user's lap. It also acts as a barrier to the transmission of heat from the computer to the supporting surface.

Further preferred but non-essential features of embodiments of the invention are set forth in the dependent claims.

Embodiments of the invention will now be described in detail, by way of example, and with reference to the accompanying drawings, in which:
Figure 1 is a plan view of a first surface of a computer stand and transportation device being a first embodiment of the invention;
Figure 2 is a plan view of a second surface of the embodiment of Figure 1;
Figure 3 shows the embodiment of Figure 1 folded to receive a computer;
Figure 4 shows a computer prepared for use with the embodiment of Figure 1;
Figures 5a to 5c show installation of the computer of Figure 2 on the device of Figure 1;
Figures 6a to 6i show how a laptop that is contained in the embodiment of Figure 1 can be brought into use in a flat configuration;
Figures 7a to 7c show how a laptop that is contained in the embodiment of Figure 1 can be brought into use in a raised configuration, in a variation of the sequence shown in Figures 6a to 6i;
Figure 8 shows the upper part of fourth, fifth and connecting panels of a second embodiment of the invention;
Figure 8a shows the lower part of the fifth panel of the second embodiment;
Figure 9 shows a support panel for the second embodiment;
Figure 10 shows the second embodiment in a closed configuration;
Figures 11 and 12 are general and side views of a third embodiment of the invention;
Figures 13 to 16 show a fourth embodiment of the invention; and
Figure 17 shows an alternative embodiment of the invention.

With reference to the drawings, a computer stand and transportation device being a first embodiment of the invention comprises an approximately rectangular elongate sheet 10 of flexible material, in this case, a double layer of tough, woven nylon material with resilient padding, and, in some cases, stiffening material, between the layers. The sheet has a long axis A-A and a short axis B-B.

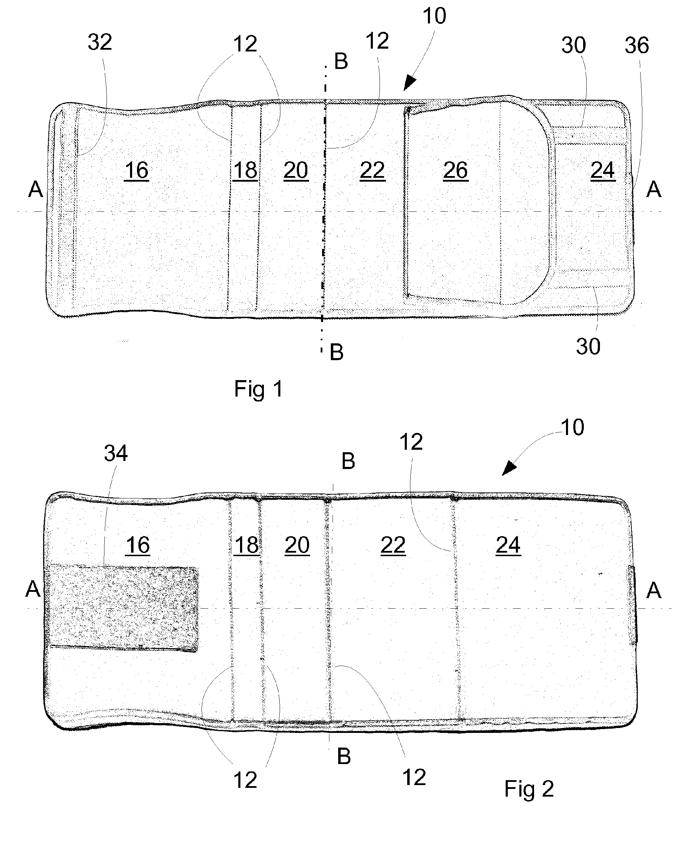

The sheet 10 is divided into several (in this embodiment, five) panels by lines of stitching 12 that extend across the sheet 10 through both of its layers parallel to the short axis B-B. Thus, the sheet 10 can be considered to comprise a plurality of panels interconnected by flexible strips at the lines of stitching that allow the panels to fold over one another. In this embodiment, the lines of stitching 12, and, therefore, the fold lines are parallel to one another. As shown in Figures 1 and 2, the panels will be identified, from left to right, as the first to the fifth panels, 16, 18, 20, 22, 24.

A cover flap 26 is attached to the fourth panel 22 on the first surface of the sheet 10. The cover flap 26 is secured to the sheet 10 by a seam that extends parallel to the short axis B-B. In this embodiment, the cover flap 26 is formed from the same material as the sheet 10. The cover flap 26 is shaped to have a periphery that is approximately a regular trapezium, attachment to the sheet 10 being along the shorter parallel side of the flap 26. The cover flap 26 carries a strip of hook-and-look fastener (not shown) close to an edge that is opposite the edge by which it is attached to the sheet 10.

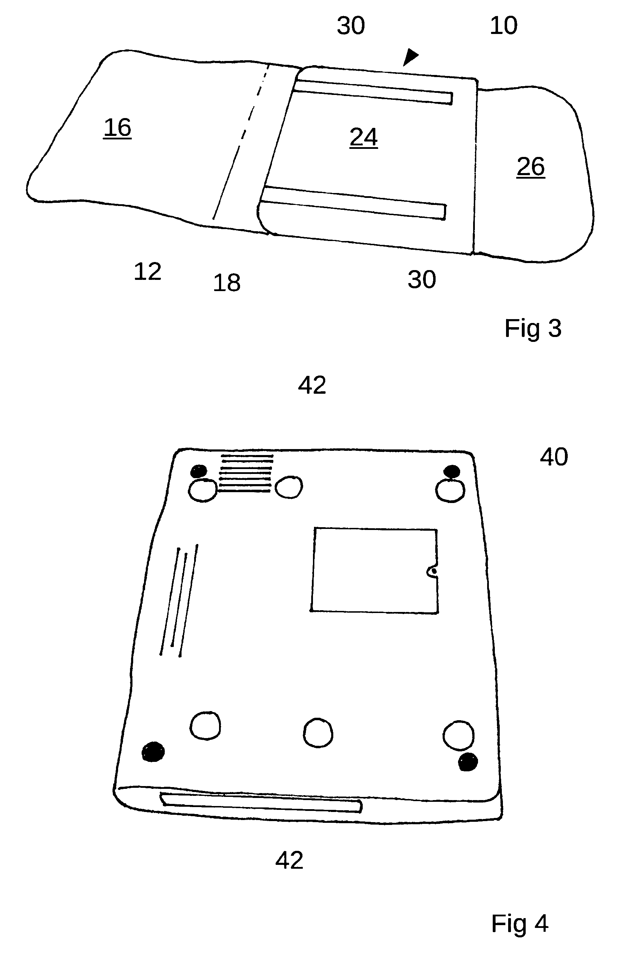

The fifth panel 24 will be referred to as the "support panel". A rectangular stiffening card is located within the sheet 10 between the layers and located by adjacent lines of stitching 12. In this embodiment, the stiffening card is formed from sheet plastic, but it could, in other embodiments, be metal, board (e.g. cellulosic or paper-derived), or another material. As shown in Figure 3, the support panel 24 is folded along a line of stitching 12 to overlie the fourth panel 22 and the third panel 20.

The support panel 24 has a support surface (part of the first surface, shown in Figure 1) upon which two strips of hook-and-loop fastener 30 are disposed parallel to one another and perpendicular to the lines of stitching 12. The strips 30 extend the length of the support panel 24 and are spaced from its edges. The support surface is dimensioned such that a typical portable computer, of a type with which the embodiment is intended to be used, can be supported upon it. A strip of hook-and-loop fastener 36 is provided along a free edge of the support panel 24 remote from the fourth panel.

The third panel 20 contains a semi-rigid stiffening card (or could be flexible), while there is a card within the fourth panel 22. These are, together, approximately the same length in the direction of the long axis A-A as the length of the support panel 24. The second panel 18 likewise is without a stiffening card, and is much shorter in the direction of the long axis A-A than the other panels: its length is selected to be approximately the thickness of a typical portable computer of a type with which the embodiment is intended to be used.

The first panel 16 will be referred to as the "cover panel", and is of approximately the same dimension as the support panel 24. The cover panel 24 contains a stiffening card. In this embodiment, the sides of the cover panel 16 that are substantially parallel to the long axis A-A are slightly concave, principally for aesthetic reasons. On the surface of the cover panel 16 that is contiguous with the support surface of the support panel 24, a strip of hook-and-loop fastener 32 extends parallel to the short axis B-B, close to an edge of the cover panel remote from the second panel 18. On the opposite surface of the cover panel 16, a wide strip of hook-and-loop fastener 34 extends from the edge of the cover panel remote from the second panel 18.

Use of the device with a portable computer will now be described.

As shown in Figure 4, a portable computer 40 is prepared for use with the device by application of several self-adhesive patches 42 of hook-and-loop fastener to the underside of the computer 40. The patches 42 are spaced in two parallel rows extending generally from front to back of the computer 40, the rows being spaced apart by substantially the same distance as the strips 30 on the support panel 24.

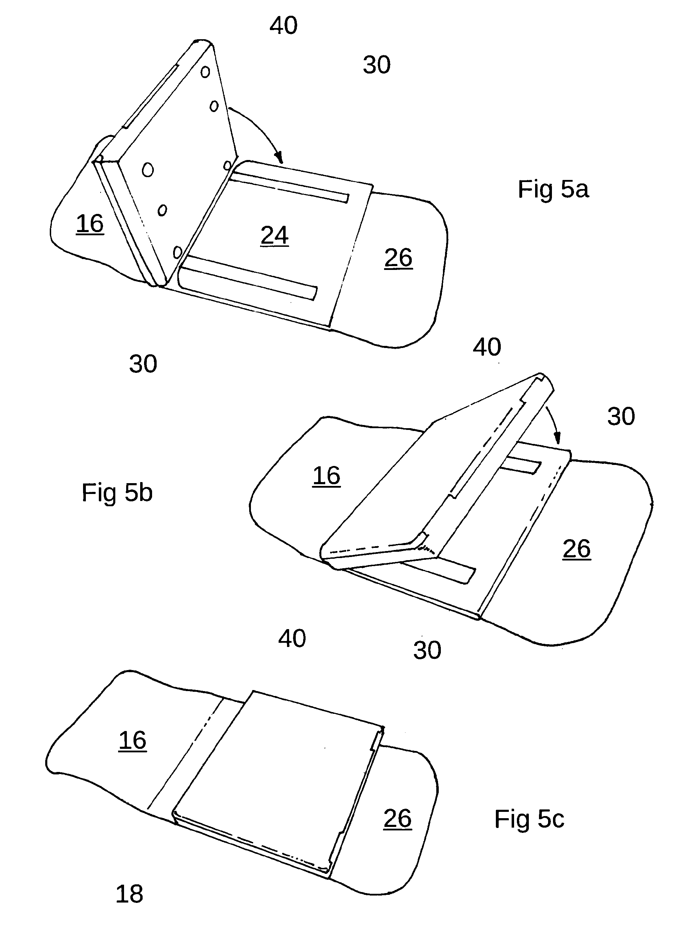

As shown in Figures 5a to 5c, once the computer 40 is thus prepared, it can be installed into the device. First, the device is placed on a flat surface and the support panel 24 is folded to overlie the third and fourth panels 20, 22 with the strips uppermost, while the cover flap 26 extends away from the support panel 24. Having been prepared as described above, the computer 40 is placed onto the support panel 24, such that the front of the computer 40 is adjacent to the fourth panel 22. The patches 42 engage with the strips 30 whereby the computer 40 is retained in place on the support panel 24.

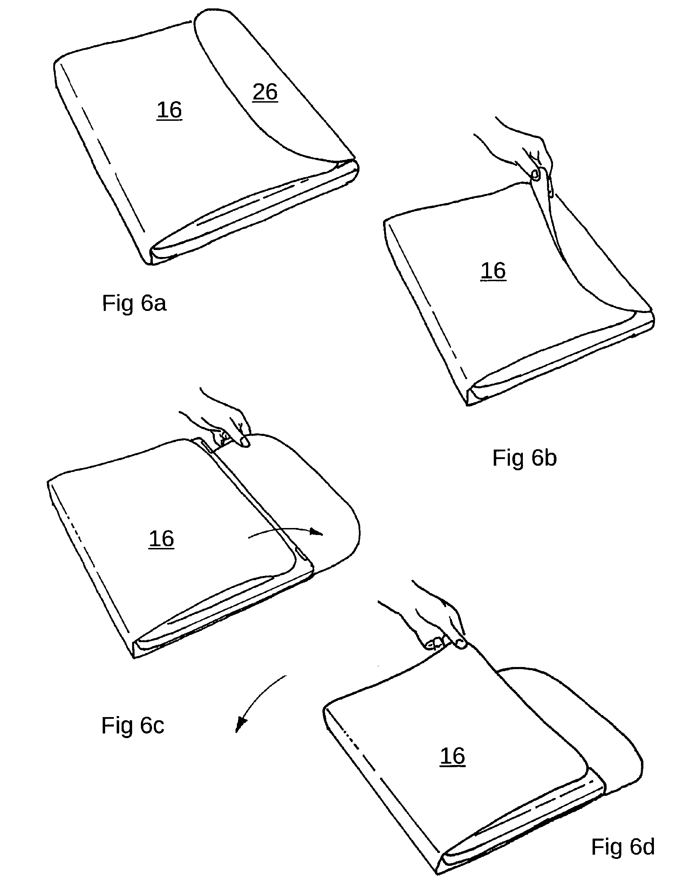

To store and protect the computer 40, the cover and second panels 16, 18 are folded such that the second panel 18 protects a front surface of the computer 40 and the cover panel 16 protects its top. In this configuration, the cover panel 18 is approximately parallel to the support panel 24 and the strip of hook-and-loop fastener 32 is exposed. The cover flap 26 is then folded to cover the still-exposed face of the computer 40, and is secured by interaction of the strips of hook-and-loop fastener on the cover flap 26 and the cover panel 16. In this configuration, the device surrounds the computer, thereby protecting it from damage. This is the configuration shown in Figure 6a.

Deployment of the computer 40 for use in a flat configuration will now be described.

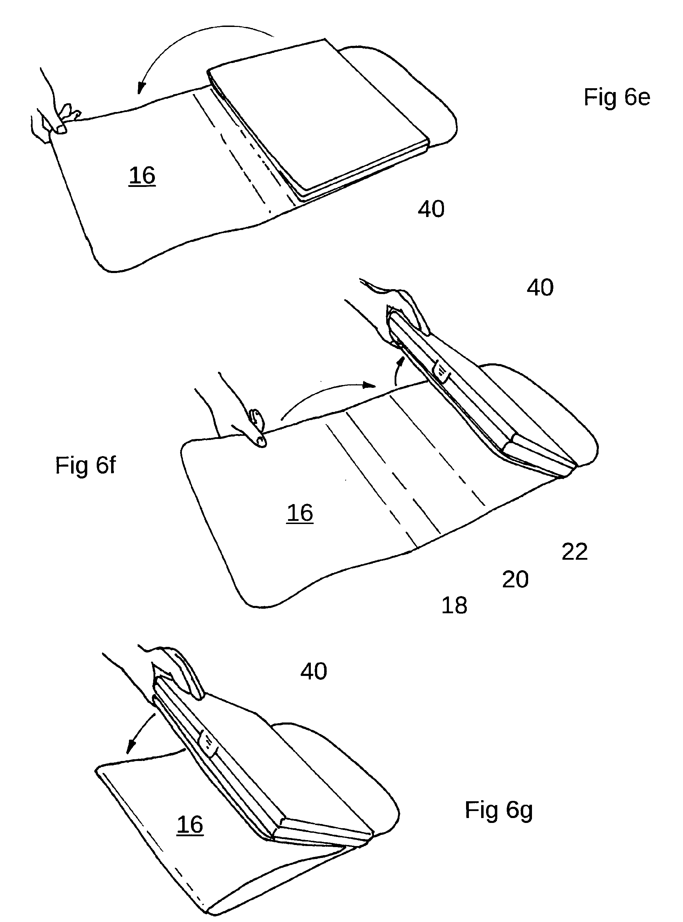

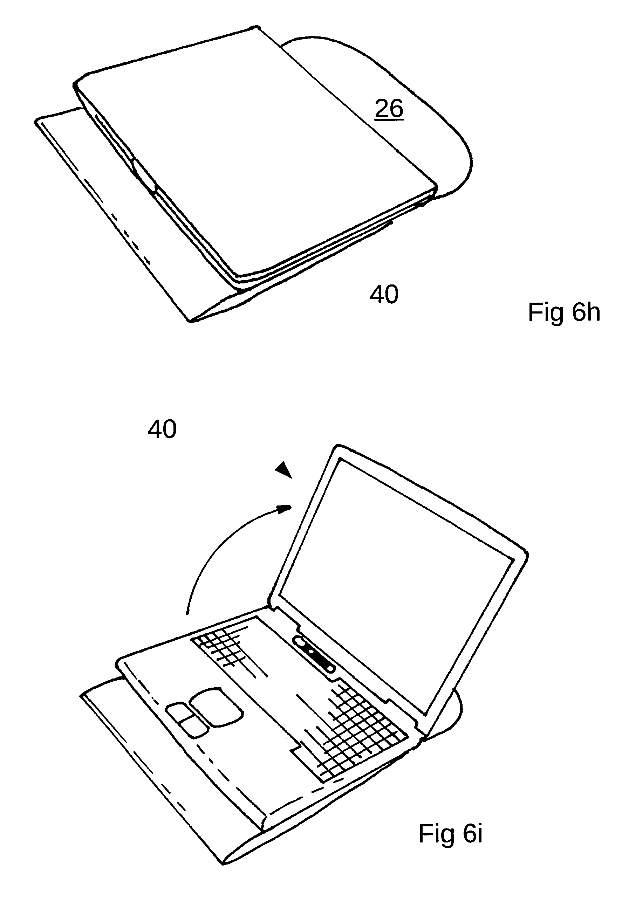

The packaged computer 40 is placed on a flat surface with the cover flap 26 uppermost. The cover flap is then folded back from the cover panel 16 against the resistance of the hook-and-loop fasteners, to the configuration shown in Figure 6c. The cover panel 16 can now be folded back to lie on the surface thereby exposing the computer 40, as shown in Figures 6d and 6e. The front of the computer 40 is now lifted. As shown in Fig 6f, the support panel 24 is lifted with it by the action of the hook-and-loop fastener strips 30 and patches 42. This allows the cover panel 16 to be folded inwards, to overlie the second, third and fourth panels 18, 20, 22 (Fig 6g). The computer 40 and the support panel 24 are then lowered to the configuration shown in Fig 6h. The computer 40 can then be opened for use (Fig 6i). When used in this way, at least three double layers of the sheet are present between the computer 40 and the support surface. This provides a thermal barrier between the support surface and the computer 40, and also absorbs small irregularities in the support surface, thereby reducing the tendency for the computer to wobble or otherwise be unstable.

Deployment of the computer 40 for use in a flat configuration will now be described.

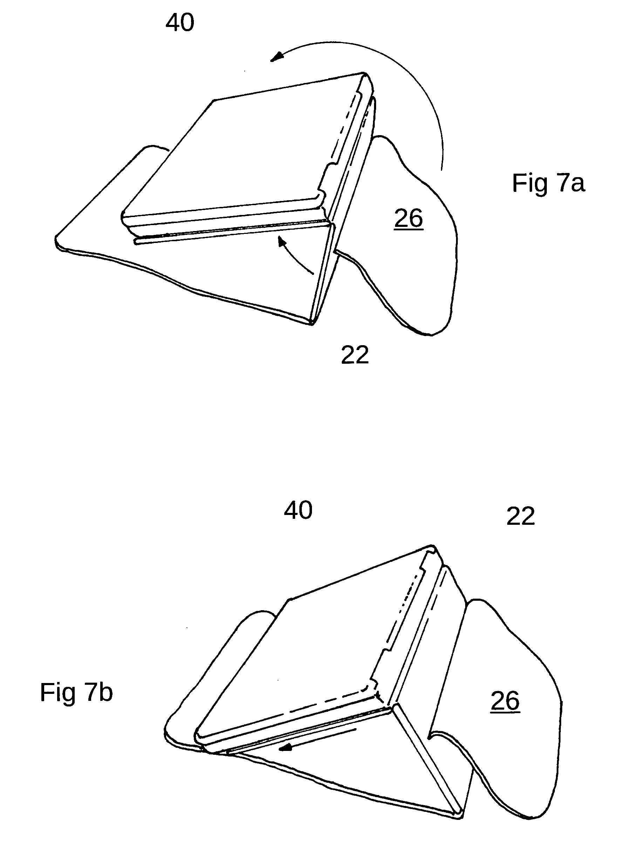

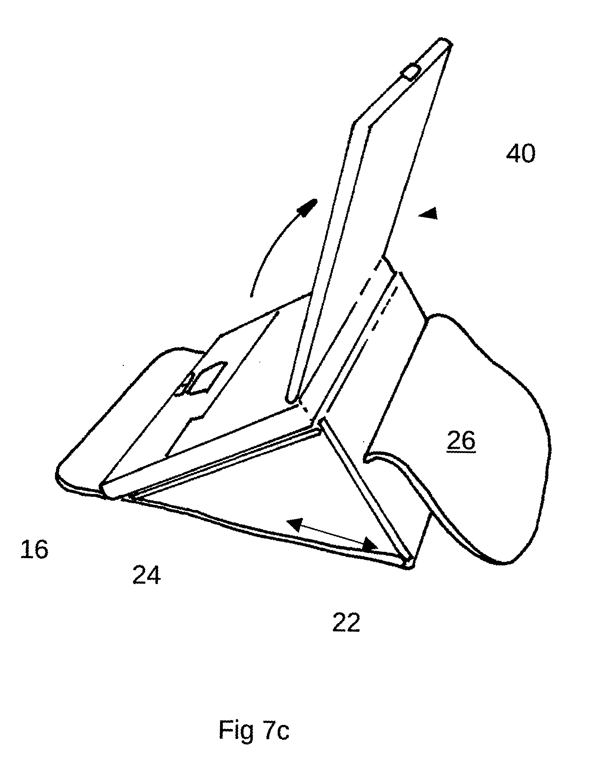

The procedure for deployment initially follows the steps described above with respect to Figures 6a to 6e, at which point, the sheet is lying flat on the support surface. The sheet is then folded at the line of stitches 12 between the third and fourth panels 20, 22 until the fourth panel 22 is approximately vertical (Fig 7a). The support panel 24 is then dropped onto the cover panel 16 to the position shown in Fig 7b. The strip of hook-and-loop fastener 36 on the edge of the support panel 24 engages with the wide strip of hook-and-loop fastener 34 on the cover panel 16, which locates the relative positions of the support panel 24 and the cover panel 16 such that the support panel 24 is supported on a slope. Thus, the computer is supported for convenient, comfortable use, as shown in Fig 7c. The position at which the edge of the support panel 24 makes contact with the cover panel 16 determines the angle of the support panel 24.

The hook-and-loop fasteners may be of a type commonly known by the registered trade mark "Velcro".

It will be appreciated that the embodiment described above requires a user to attach fastening patches 42 to their computer. A user may not always be willing or permitted to do this. If the user simply omits the step of attaching the patches 42 to their computer, it will not stay in place on the support panel when it is in use. This embodiment serves to address this problem.

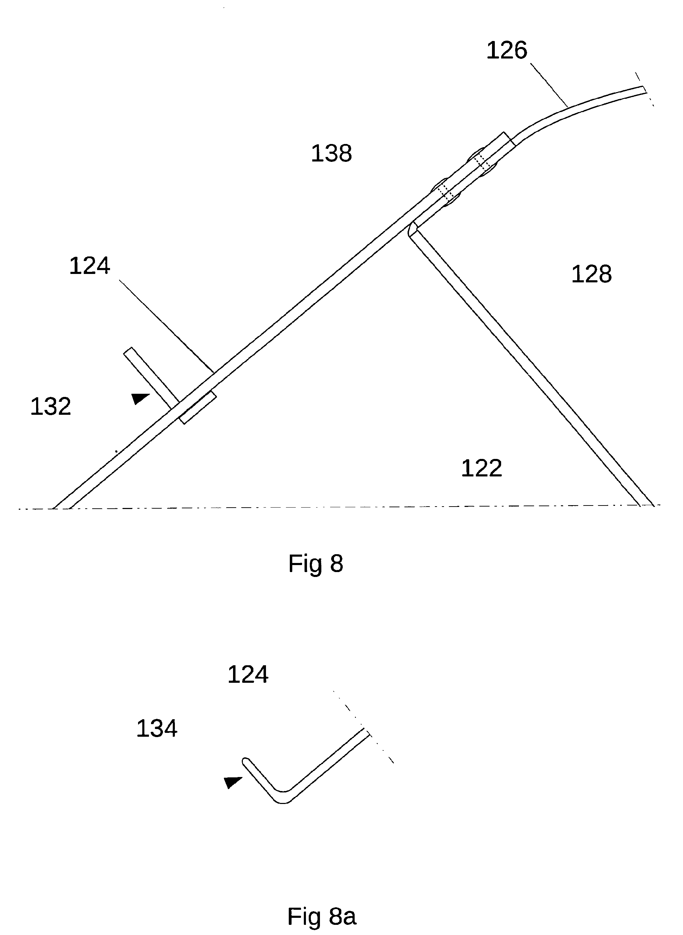

In this embodiment, the support panel 24 is replaced with a support panel 124 formed of stiff material, such as stiff plastic or metal plate, separately from the other panels. As shown in Figure 8, the support panel 124 is connected to the fourth panel 122 by way of a connecting panel 128. The connecting panel 128 is formed as part of the sheet, and is connected to and can pivot with respect to the fourth panel 122. The connecting panel 128 is secured to an upper part of the support panel 124 by fasteners 138. Thus, the support panel 124 can pivot with respect to the fourth panel 124 in much the same manner as in the first embodiment.

The support panel 124 has several slots 130 formed through it. The slots 130 are arranged in two groups, disposed symmetrically about the long axis A-A. Within each group, the slots 130 are parallel to one another, extending parallel to the fold lines, and each slot extends in alignment with a corresponding slot 130 in the other group. In order to prevent a computer placed on the support panel 124 from sliding from it, a respective L-shaped stop 132 is placed in each of two aligned slots 130, one from each group. The stops 132 may be formed of metal, plastic, or other stiff material. Note that this embodiment may also carry strips of hook-and-loop fastener on the support panel 124 for the convenience of those users who are willing to apply patches to their computer. Alternatively or additionally, a lower edge portion 134 of the support panel 124 may be turned upwards, as shown in Figure 8a to provide a ledge that can support a computer placed upon the support panel 124.

There is a risk that the computer will slide sideways out of the case since it is not firmly fixed to the support panel. Therefore, this embodiment includes a respective tab 140 secured close to opposite short sides of the support panel 124 on the surface opposite the support surface. A portion of hook-and-loop fastener is secured to each tab 140.

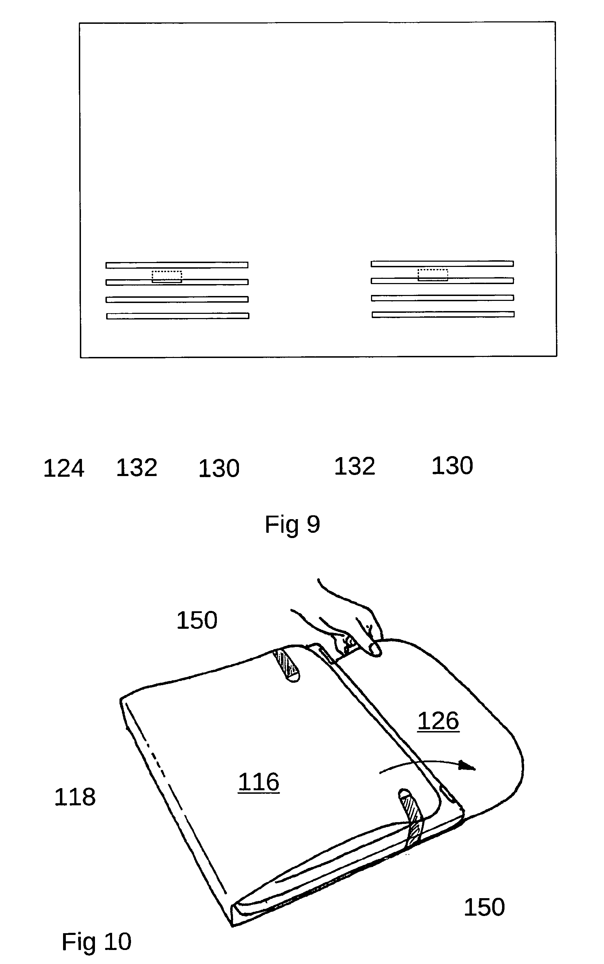

When the case is closed, each tab 140 is looped around to make contact with a potion of hook-and-loop fastener carried on the cover panel 16, as shown in Figure 10. (Alternatively, mechanical fasteners could be used in place of hook-and-loop fasteners.) The tabs then serve to resist movement of a computer in a direction generally parallel to the short axis B-B. The tabs are peeled back to separate the hook-and-loop fastener before opening the case.

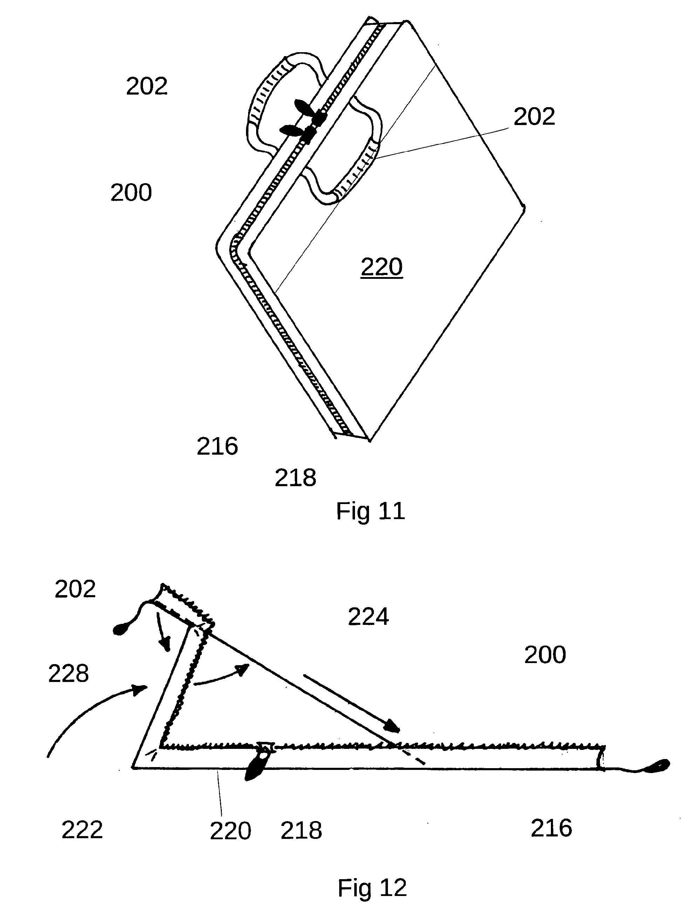

An alternative approach to preventing a computer sliding from the case is to provide a peripheral zip fastener 200 that can interconnect the fourth panel 222 and the cover panel 216, as shown in Figures 11 and 12. Since the zip fastener holds the case securely closed, it avoids the need to provide a cover flap. This allows the case to be closed securely, and protects a computer carried within it by way of a carrying handle 202.

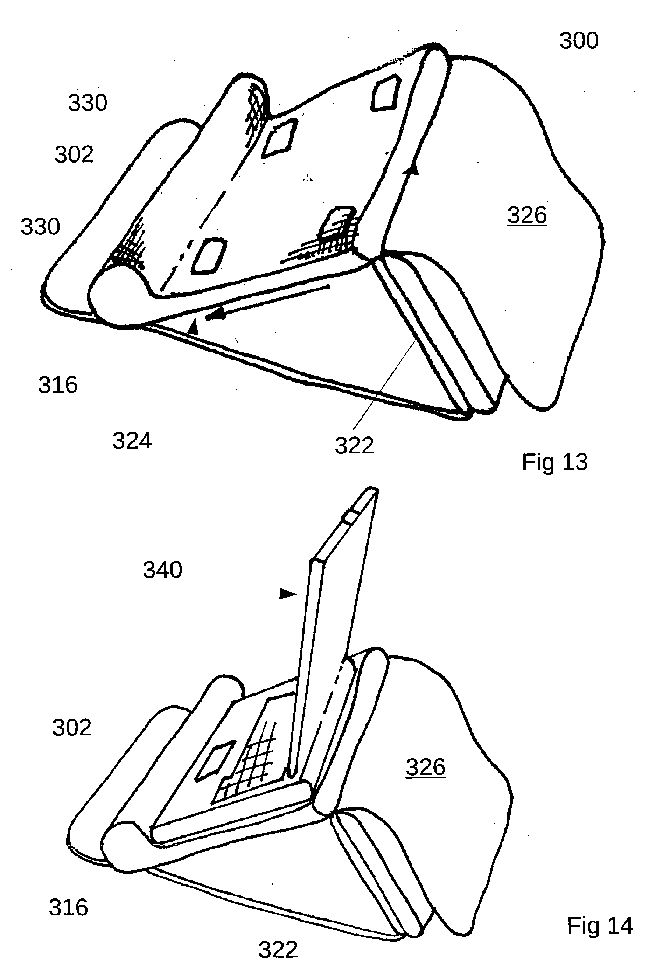

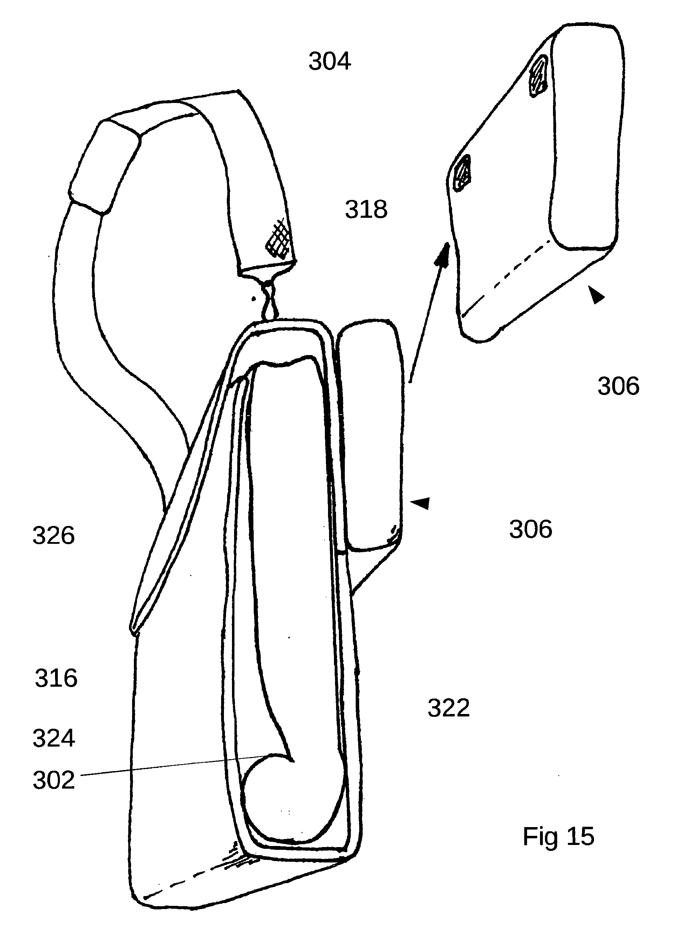

A fourth embodiment of the invention incorporates a modification to the support panel that can be applied to any of the embodiments described above. This will now be described with reference to Figures 13 to 16.

In this embodiment, the support panel 324 is in the form of a pouch with an opening indicated at 300. The pouch is formed of padded fabric material. As with previous embodiments, the support panel 324 has hook-and-loop fasteners on its supporting surface 330 that can optionally be used to secure a laptop 340 computer to it. A lower portion of the supporting panel 324 has a bulbous portion 302 that extends across the short axis of the case. As shown in Figure 14, a computer 340 can be placed on the supporting surface, and it will be prevented from sliding off the stand by the bulbous portion 302.

For storage, the computer can be placed in the pouch where it is protected by the padded fabric. This leaves the supporting surface free for other uses, such as supporting papers or a book. When the case is folded, the computer is safely retained within it.

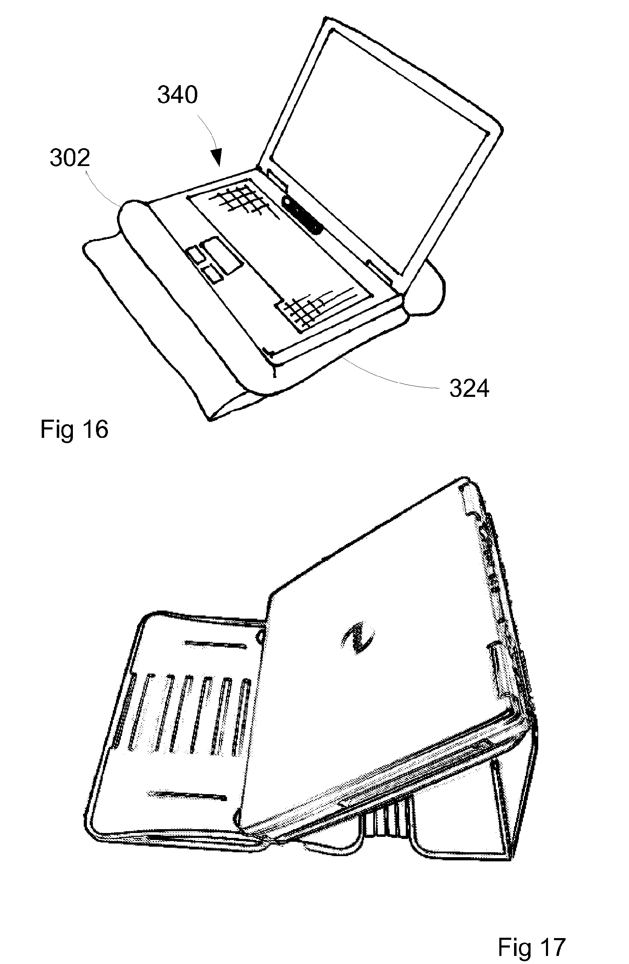

This embodiment can be folded as shown in Figure 16 whereby the support panel 324 overlies the other panels. In this configuration, the stand can support a computer 340 on a table, supporting surface, or a user's lap. In this configuration, the fabric of the support panel 324 acting as a thermal barrier between the computer and its support.

This embodiment also includes a strap 304 to allow it to be carried on a user's shoulder and a detachable carrying pack 306.

A further alternative embodiment is shown in Figure 16. The functions of the device and its principle of operation are essentially the same as the first embodiment. However, the panels are formed from sheets of stiff material, which is, in this case, metal formed such as by laser cutting, interconnected by flexible elements. Rather than using hook-and-loop fasteners to locate the support panel on the cover panel, there is a tab on the support panel that can engage with one of several slots on the cover panel.

## Claims

1. A device for use with a portable computer that, in a first configuration, can serve as a protective storage container for a portable computer and, in a second configuration, can serve as a support upon which a portable computer can be placed for use, the device comprising a generally rectangular sheet having first to fifth interconnected panels disposed along a long axis, the panels being interconnected by elements that allow them to fold with respect to one another about respective axes, **characterised in that**:
a) the fifth panel has a support surface upon which a computer can be supported;
b) the third and the forth panels are, together, in the direction of the long axis of approximately the same length as the fifth panel;
c) the first panel is of approximately the same dimension as the fifth panel;
d) the first panel and the fifth panel carry fasteners such that a free edge region of the fifth panel can be connected to a face of the first panel;
in the first configuration:
e) the fifth panel is folded to overlie the third and the forth panels to the underside of a computer, the first panel is approximately parallel to the fifth panel, to the top of a computer, and the second panel extends approximately normally thereto to the front of a computer;
in the second configuration:
f) the edge region of the fifth panel is connected to the face of the first panel whereby the fifth panel, and a computer carried thereon, is supported on a slope by the fourth panel.

2. A device according to claim 1 in which in the second configuration the first panel can alternatively be folded to to overlie the second, third and fourth panels and the fifth panel folded to overlie the first panel, whereby a computer on the fifth panel lies substantially flat with relation to a supporting surface.

3. A device according to claim 1 or claim 2 further comprising a cover flap which, when the device is in the first configuration, can be folded to cover an exposed face of a computer.

4. A device according to any one of claims 1 to 3 in which the panels are formed from a flexible sheet within which fold lines are formed.

5. A device according to claim 4 in which the sheet comprises two layers of flexible material.

6. A device according to claim 5 in which the flexible material is woven nylon.

7. A device according to claim 5 or claim 6 in which fold lines are formed at lines of stitching that pass through both layers or lines of welding that secures the layers together.

8. A device according to any one of claims 5 to 7 in which some or all of the panels are provided with stiffening means such as a flat, stiff sheet, disposed between the layers and located by the fold lines.

9. A device according to any preceding claim that may be secured in its various configurations by securing the relative positions of the panels.

10. A device according to claim 9 in which the fifth panel carries a hook-and-loop fastener adjacent to a free edge that is transverse to the long axis and the first panel carries a co-operable hook-and-loop fastener on a surface.

11. A device according to claim 10 in which the position at which the free edge of the fifth panel makes contact with the surface of the first panel determines the angle of slope of the fifth panel.

12. A device according to any preceding claim in which the fifth panel is formed as a pouch into which a computer can be placed for storage.

13. A device according to any preceding claim in which the fifth panel is formed from padded fabric material.

14. A device according to any preceding claim further comprising one or more stops that can be located on the fifth panel to support a computer placed thereon.

15. A device according to any preceding claim further comprising attachment means that can be used to releasably secure a computer to the device.
